# FASCICULE DE BREVET EUROPEEN

(11) **EP 2 331 791 B1**
(45) Date de publication et mention de la délivrance du brevet: **15.08.2012**
(21) Numéro de dépôt: 09747898.6
(22) Date de dépôt: 23.09.2009
(51) Int. Cl.: F01D 17/16, F01D 17/20, F02C 6/08, F02C 9/18, F02C 9/22

(54) **SYSTEME DE COMMANDE D'EQUIPEMENTS A GEOMETRIE VARIABLE D'UNE TURBOMACHINE**
SYSTEM ZUR STEUERUNG VON VORRICHTUNGEN MIT VARIABLER GEOMETRIE IN EINEM TURBOMOTOR
SYSTEM FOR CONTROLLING VARIABLE GEOMETRY APPARATUSES IN A TURBINE ENGINE

(30) Priorité: 30.09.2008 FR 0856573
(43) Date de publication de la demande: 15.06.2011
(73) Titulaire: Snecma, 75015 Paris (FR)
(72) Inventeur: BOURU, Michel, F-77950 Montereau sur le Jard (FR); GAULLY, Bruno, F-91630 Marolles en Hurepoix (FR)
(74) Mandataire: Barbin le Bourhis, Joël
(86) Numéro de dépôt international: PCT/FR2009/051791
(87) Numéro de publication internationale: WO 2010/037949

(56) Documents cités:
- EP-A- 1 398 464
- EP-A- 1 724 472
- WO-A-2007/116319
- FR-A- 2 445 439
- FR-A- 2 633 046

## Description

La présente invention se rapporte au domaine général de la commande d'équipements à géométrie variable d'une turbomachine. L'invention concerne plus particulièrement l'optimisation de la commande de plusieurs équipements d'une turbomachine .

Par "équipement à géométrie variable", on entend ici un équipement, comportant un organe de commande dont la dimension, la forme, la position et/ou la vitesse est ou sont susceptible(s) d'être modifiée(s) en fonction d'événements détectés ou de régimes de la turbomachine, pour agir sur le fonctionnement de la turbomachine. Des exemples de géométries variables dans de tels équipements sont des positions de vannes de prélèvement d'air du compresseur, des jeux aux sommets d'aubes de turbine, des vitesses de pompe à carburant, etc.

Le terme corps tel qu'il est employé ici désigne un sous-ensemble d'une turbomachine, comportant comme organes principaux un compresseur et une turbine assemblés sur un même axe. Un cas particulier de corps est le corps de post-combustion, dans lequel le compresseur est seulement composé par une tuyère convergente, et qui est utilisé dans des statoréacteurs. Un exemple typique pour des corps distincts de turbomachine est constitué par les corps basse et haute pression d'un turboréacteur.

En général, les corps de turbomachine sont conçus pour pouvoir fonctionner de manière indépendante les uns des autres. Leurs vitesses de rotation sont indépendantes, même si elles peuvent être liées ou corrélées dans certains régimes de fonctionnement.

Aussi habituellement, du fait de cette indépendance entre les différents corps d'une turbomachine, pour commander des équipements à géométrie variable faisant partie de corps différents, on prévoit pour ces équipements des systèmes de commande distincts. Pour cette raison, commander deux équipements à géométrie variable de deux corps distincts nécessite ainsi en général deux circuits de commande, deux actionneurs, deux sources de puissance, etc.

Il s'ensuit que la masse, le coût, et l'encombrement d'un tel système de commande sont relativement élevés. Cela pose notamment problème sur des turbomachines équipant de petits d'avions, pour lesquelles ces problèmes sont particulièrement aigus: le document FR 2445439 décrit un système de commande de l'art antérieur.

Un premier objectif de l'invention est donc de définir un système de commande d'au moins deux équipements à géométrie variable d'une turbomachine et ;
comportant un actionneur qui actionne les deux équipements ; dont un équipement comporte au moins un étage d'aubes de stator à angle de calage variable ; et
dont un équipement est une vanne ou comporte au moins une vanne de prélèvement d'air d'un corps de la turbomachine ;
système de commande qui remédie au moins partiellement aux problèmes de masse, de coût, et d'encombrement cités précédemment.
Cet objectif est atteint grâce au fait que le système de commande est agencé pour commander une ouverture progressive de l'étage d'aubes, et une fermeture progressive de la vanne de prélèvement d'air, au fur et à mesure qu'un paramètre d'actionnement de l'actionneur augmente.

Dans un mode de réalisation, le système de commande est apte à commander trois, voire quatre équipements à géométrie variable à l'aide d'un unique actionneur.

Dans un mode de réalisation, un équipement à géométrie variable est commun à plusieurs corps de la turbomachine, notamment deux corps.

En utilisant un seul actionneur pour la commande de plusieurs (au moins deux) équipements à géométrie variable, le système de commande permet de réduire le nombre de pièces de la turbomachine et ainsi d'atteindre l'objectif de l'invention. Le poids, le volume, le coût d'un second système de commande pour le second équipement à géométrie variable, sont au moins en grande partie évités.

L'invention peut notamment être mise en oeuvre dans une turbomachine double-corps, c'est-à-dire avec un corps haute pression et un corps basse pression. Le ou les étages d'aubes à angle de calage variable fait ou font partie habituellement du corps haute pression. Dans ce cas, le premier équipement commandé par le système de commande peut faire partie du corps basse pression de la turbomachine, le second équipement commandé, qui comprend le ou les étages d'aubes à angle de calage variable, faisant partie du corps haute pression.

Les étages d'aubes à angle de calage variable d'un corps haute pression de turbomachine se prêtent en particulier à leur commande conjointe avec un équipement du corps basse pression, lorsqu'on les dispose sur la périphérie (et relativement en amont) du corps haute pression : Ainsi, ils sont situés au voisinage du corps basse pression. Cette proximité favorise la réalisation d'un système de commande commun pour les étages d'aubes et pour un équipement à géométrie variable du corps basse pression.

Selon un mode de réalisation, dans le second équipement l'étage d'aubes est formé d'une pluralité d'aubes qui sont montées chacune de façon pivotante sur un carter de la turbomachine et d'un anneau de commande entourant le carter et relié à chacune des aubes de l'étage par l'intermédiaire de leviers, l'actionneur étant apte à entraîner en rotation l'anneau de commande de l'étage par l'intermédiaire d'un organe pilote monté de façon pivotante sur le carter.

Selon un mode de réalisation, l'équipement à géométrie variable qui est ou du moins comporte au moins une vanne de prélèvement d'air de la turbomachine peut être une vanne ou également un ensemble de vannes de décharge ou de prélèvement d'air.

Selon différents autres modes de réalisation, l'équipement à géométrie variable qui est ou comporte au moins une vanne de prélèvement d'air, est ou comporte l'un des éléments suivants ou un élément de l'un des dispositifs suivants :
- une vanne de prélèvement d'air booster ('Variable Bleed Valve' VBV) ;
- une vanne de prélèvement d'air compresseur haute pression à ouverture proportionnelle ('Transient Bleed Valve' TBV, et 'Start Bleed valve' SBV) ;
- une vanne de prélèvement d'air compresseur haute pression tout ou rien ('Handling Bleed Valve' HBV) ;
- une vanne de régulation d'un débit d'air contribuant au contrôle de jeu, dans une turbine basse pression ('Low Pressure Turbine Active Clearance Control' LPTACC), ou dans une turbine haute pression ('High Pressure Turbine Active Clearance Control' HPTACC).

En outre, la réalisation d'un système de commande selon l'invention peut comporter notamment les différents perfectionnements suivants :

Dans un mode de réalisation, dans le système de commande, l'actionneur comporte un organe de commande mobile dont les déplacements transmettent la commande aux deux équipements. L'organe de commande peut par exemple être le bras d'un vérin.

Dans une variante de ce mode de réalisation, l'actionneur est agencé pour actionner un premier de ces équipements en faisant varier un paramètre dans une plage d'actionnement de premier équipement en dehors de laquelle il ne peut agir sur le premier équipement, l'actionneur étant agencé pour actionner le second de ces équipements en faisant varier le même paramètre dans une plage d'actionnement de second équipement, en dehors de laquelle il ne peut agir sur le second équipement, au moins une partie de la plage d'actionnement de premier équipement étant hors de la plage d'actionnement de second équipement.

Le paramètre de l'actionneur indiqué ci-dessus est généralement le paramètre de position de l'organe d'actionnement de l'actionneur. Par exemple, ce paramètre est la position de l'extrémité du bras d'un vérin. Faire varier ce paramètre signifie en fait de manière équivalente déplacer l'extrémité du vérin ou la position de l'extrémité opérante de l'actionneur.

Dans ce système de commande, la commande par un actionneur unique de deux équipements à géométrie variable est facilitée par le fait que les plages d'actionnements des deux équipements ne se correspondent pas, la plage d'actionnement de l'un d'entre eux (le premier équipement) comportant une partie qui ne fait pas partie de celle de l'autre (le second équipement).

Le fonctionnement du système de commande est normalement prévu pour que, pour chacun des équipements, les variations du paramètre de l'actionneur entre les bornes de la plage d'actionnement de l'équipement suffisent pour actionner ce dernier dans cette plage avec une amplitude suffisante.

Par ailleurs, lorsque le paramètre d'actionnement varie dans un intervalle situé en dehors de la plage d'actionnement d'un équipement, celui-ci n'est pas actionné par l'actionneur. Un tel intervalle de valeurs du paramètre de l'actionneur, dans laquelle aucune action n'est effectivement appliquée à l'équipement considéré, constitue une 'course morte'. Dans cette plage, quelles que soient les variations du paramètre, l'actionneur n'agit pas (ou pas significativement) sur l'équipement considéré.

La difficulté de commande associée à l'usage de ce système de commande est que chaque action sur l'actionneur est ou peut être transmise (selon que l'on est ou non dans leurs plages d'actionnement respectives) à l'un et/ou à l'autre des équipements.

En particulier, lorsque l'on fait varier le paramètre d'actionnement dans une plage commune aux plages d'actionnements des deux actionneurs, on agit à la fois sur l'un et sur l'autre des équipements.

Par exemple, lorsque l'on fait varier le paramètre de l'actionneur dans la plage d'actionnement du premier équipement, si cette variation se trouve également dans la plage d'actionnement de l'autre équipement, il s'ensuit que simultanément on transmet une nouvelle commande aux deux équipements, les deux commandes étant fixées par les variations du même paramètre, le paramètre d'actionnement.

Cette difficulté d'emploi du système de commande selon l'invention peut être cependant considérée comme acceptable et est parfois négligeable voire inexistante, lorsque le recouvrement entre les plages d'actionnement des deux équipements est suffisamment faible, et/ou que l'amplitude des variations de commande de l'un au moins des équipements peut rester faible ou limitée alors même que le paramètre d'actionnement parcourt toute la plage d'actionnement de l'autre équipement.

Aussi, malgré cette difficulté d'emploi, le gain procuré par la possibilité de commander à la fois, dans la turbomachine, deux équipements à géométrie variable, sans subir le poids, l'encombrement et le coût d'un double système de commande, est intéressant.

La difficulté d'emploi de ce système de commande peut en outre être minimisée en choisissant un mode de réalisation approprié.

Selon un mode de réalisation, la plage d'actionnement de second équipement est incluse dans la plage d'actionnement de premier équipement. Cette disposition permet d'avoir une amplitude d'actionnement importante pour le premier équipement, facilitant sa réalisation mécanique et limitant les contraintes mécaniques reçues par les organes de commande et/ou les éléments commandés.

Selon un mode de réalisation, la plage d'actionnement de second équipement a une amplitude inférieure à 20%, voire à 10%, de l'amplitude totale de la plage d'actionnement de premier équipement. L'amplitude de la plage d'actionnement de second équipement est donc réduite. De la sorte, lorsque la plage de second équipement est incluse dans la plage de premier équipement, les actions de commande du second équipement n'entrainent qu'une variation faible et peu sensible de la commande du premier équipement. Cette disposition facilite la commande avec un seul système de commande, des deux équipements commandés. En effet la commande du premier équipement reste alors sensiblement constante, ou du moins sa variation reste faible ou marginale, alors que l'on commande le second équipement avec la totalité de l'amplitude de commande prévue pour ce dernier.

Selon un mode de réalisation, la liaison entre l'actionneur et l'un des équipements comporte un dispositif de débrayage, apte à débrayer l'entrainement de cet équipement par l'actionneur sur une plage de valeurs du paramètre d'actionnement. Cette plage de valeurs est donc située en dehors de la plage d'actionnement de l'équipement considéré. Ainsi le dispositif de débrayage permet de réserver un intervalle de la plage d'actionnement à la seule commande du ou des équipement(s) commandé(s) autre(s) que l'équipement considéré. Cela peut être essentiel lorsque l'équipement considéré ne doit pas être affecté alors même que la commande de l'un des autres équipements commandés varie.

Selon une variante de ce mode de réalisation, le dispositif de débrayage comporte un premier organe de commande, mobile dans un espace libre d'un deuxième organe de commande, cet intervalle aménageant ainsi une course morte pour le second équipement. Dans la course morte ménagée grâce à cet organe de commande mobile, il est possible librement de commander le premier équipement, sans que cette commande n'affecte le second équipement.

Selon un mode de réalisation, le système de commande comporte un dispositif de démultiplication d'actionnement disposé dans la liaison entre l'actionneur et l'un des équipements. Ainsi, même avec une plage d'actionnement de faible amplitude pour cet équipement, il est possible de piloter celui-ci suivant une grande amplitude, du fait de la démultiplication apportée par le dispositif de démultiplication d'actionnement. Un exemple d'un tel dispositif de démultiplication est un levier.

Selon un mode de réalisation, le système de commande comporte en outre des moyens de rappel maintenant un organe de commande de l'un des équipements dans une position prédéterminée, au moins lorsque le paramètre de l'actionneur varie dans un intervalle situé à l'extérieur de la plage d'actionnement de l'équipement.

Un second objectif de invention est de définir une turbomachine équipé d'un système de commande comportant un actionneur (24) apte à commander deux équipements à géométrie variable d'une turbomachine faisant partie de deux corps différents, et de masse, coût et/ou encombrement réduit(s).

Cet objectif est atteint grâce au fait que la turbomachine est équipée d'un système de commande tel que défini précédemment.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- La figure 1 est une vue en perspective d'un système de commande selon l'invention ;
- les figures 2, 3 et 4 sont des vues de dessus du système de la figure 1, présenté respectivement dans la position minimale, une position intermédiaire et la position maximale d'extension de l'actionneur ;
- la figure 5 est une vue en coupe longitudinale du système de commande illustré par les figures 1 à 4, dans le cas particulier où l'équipement à géométrie variable est une trappe de prélèvement d'air du corps haute pression ;
- la figure 6 est une variante d'un système de débrayage permettant d'aménager une 'course morte' ; et
- la figure 7 est un graphique montrant les actions sur les équipements commandés d'un système de commande selon l'invention intégrant le dispositif de débrayage présenté en figure 6.

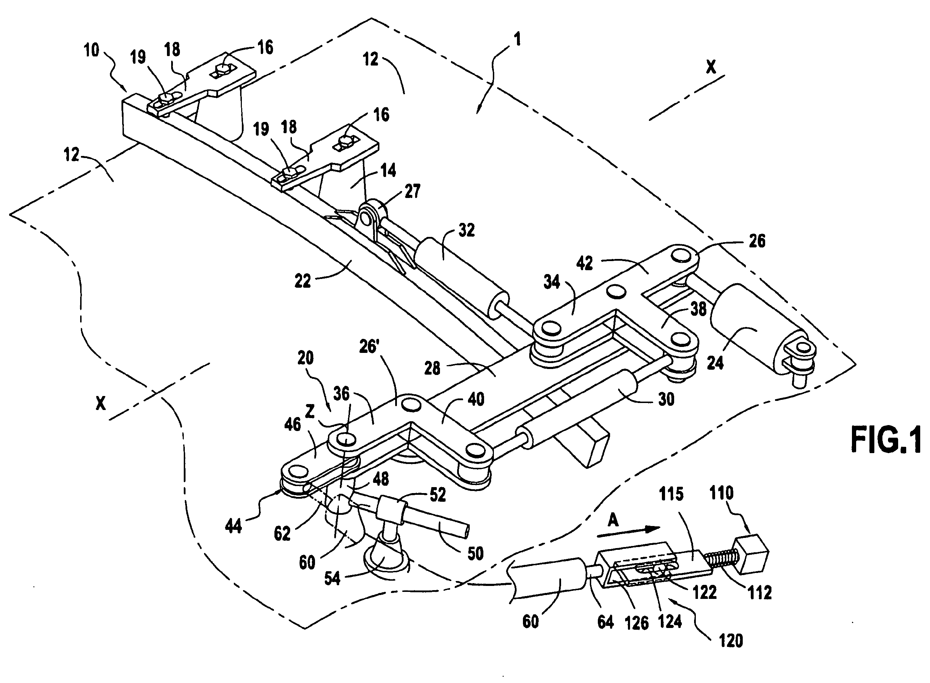

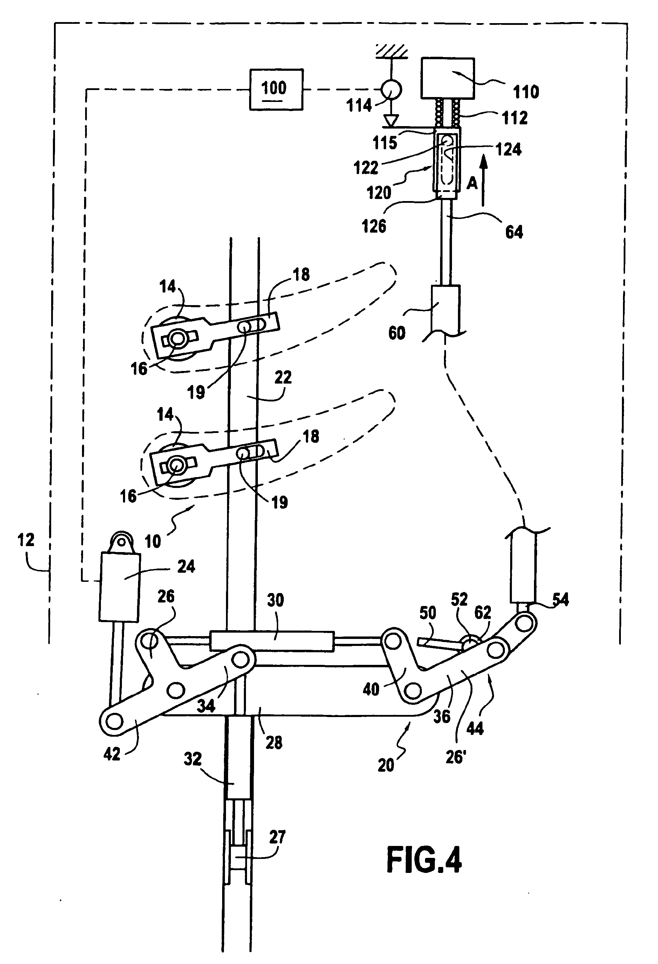

En faisant référence aux figures 1 à 4, un mode de réalisation d'un système de commande 1 selon l'invention va maintenant être décrit.

Le système de commande 1 permet de commander à la fois la rotation de l'anneau de commande 22 d'un étage 10 d'aubes à angle de calage variable (premier équipement 10), ainsi que le déplacement d'un organe de commande 115 d'un second équipement 110.

Le second équipement 110 à géométrie variable peut être de différents types, par exemple il peut être une vanne de prélèvement d'air de la turbomachine.

L'étage 10 d'aubes à calage variable appartient par exemple à un compresseur de turbomachine. Le compresseur comporte une enveloppe annulaire de stator 12 (ou carter) qui est centrée sur l'axe X-X de la turbomachine.

L'étage 10 se compose d'une pluralité d'aubes 14 disposées radialement autour de l'axe X-X de la turbomachine. Chacune des aubes 14 est pivotante autour d'un axe 16 (ou pivot) qui traverse le carter 12.

Chaque pivot 16 des aubes à calage variable 14 est relié à une extrémité d'une biellette ou levier de commande 18 dont l'autre extrémité est articulée autour de tourillons 19 disposés radialement sur l'anneau de commande 22.

L'anneau de commande 22 entoure le carter 12 et est centré sur l'axe X-X de la turbomachine. La modification synchronisée de la position angulaire des aubes 14 est ainsi réalisée par rotation de l'anneau de commande 22 autour de l'axe X-X de la turbomachine.

En outre, le système de commande comporte un actionneur 24 de type vérin, fixé au carter 12 pour entraîner en rotation l'anneau de commande 22 de l'étage 10 par l'intermédiaire d'un organe pilote 26 de type renvoi qui est monté de façon pivotante sur un boîtier 28 du carter 12 de la turbomachine.

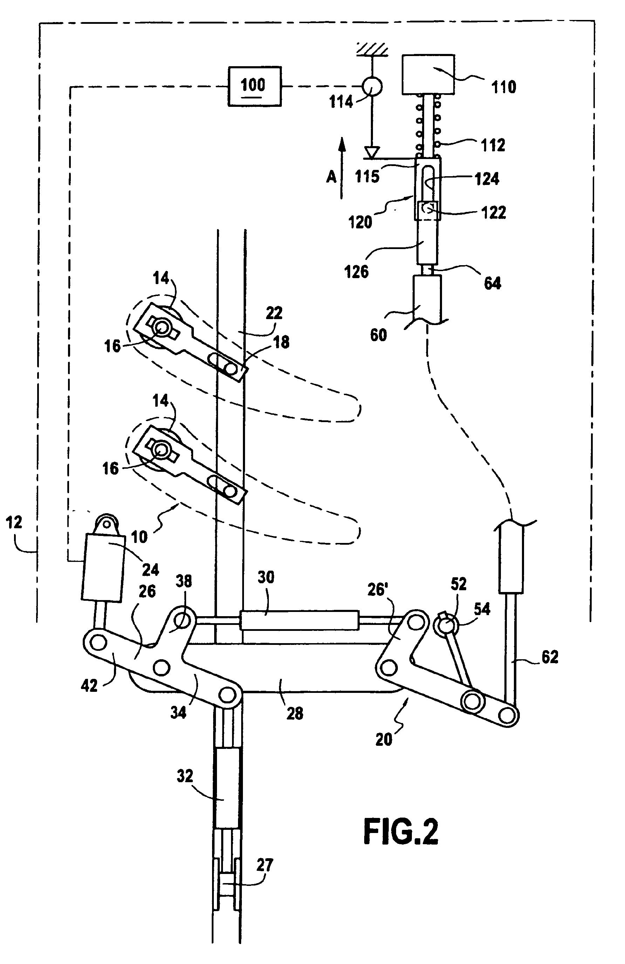

Le vérin 24 est commandé par une unité de commande électronique 100 (apparaissant sur les figures 2 à 4).

Une bielle de commande 32 de type ridoir à vis assure la transmission du mouvement du renvoi pilote 26 à l'anneau 22. Cette bielle s'étend tangentiellement à l'anneau 22 sur lequel elle est fixée par l'intermédiaire d'une chape de liaison 27. A son extrémité opposée à la chape 27, la bielle 32 est fixée à un bras (ou branche) 34 du renvoi pilote 26, en lui étant articulée.

Le renvoi 26 et la bielle 32 constituent la chaine de transmission d'actionnement de l'actionneur (vérin 24) à l'anneau de commande 22.

La transmission de la commande au second équipement commandé 110 est faite tout d'abord par une barre de synchronisation 30.

La barre de synchronisation 30 transmet le mouvement du vérin 24 au second équipement 110, par l'intermédiaire d'un organe suiveur 26' de type renvoi, monté également de façon pivotante sur le boîtier 28 du carter 12.

Ainsi, la barre de synchronisation 30 du système de commande unit deux bras respectifs 38, 40 des renvois pilote 26 et suiveur 26' en leur étant articulée. Le vérin 24 est articulé à un troisième bras 42 du renvoi pilote 26, opposé au bras 34 sur lequel est fixée la bielle 32.

Par ailleurs, le système de commande représenté sur les figures 1 à 4 comporte un dispositif de démultiplication d'actionnement 20 (non indispensable à l'invention), interposé sur la liaison entre l'actionneur 24 et l'équipement à géométrie variable 110.

Ce dispositif comporte notamment un organe pivotant supplémentaire 44 (ou renvoi supplémentaire) intercalé entre l'organe suiveur 26' et l'équipement à géométrie variable 110. Ce renvoi supplémentaire 44 est monté de façon pivotante à la fois sur l'organe suiveur 26', et indirectement sur le carter 12 via une tige de guidage 50 et un support pivotant 54.

En effet, le renvoi supplémentaire 44 comporte un bras 46 dont une première extrémité est reliée à une extrémité 62 d'un câble de commande 60 de l'équipement à géométrie variable 110, en lui étant articulée, et dont la deuxième extrémité est montée de façon pivotante à l'extrémité d'un bras 36 du renvoi suiveur 26'. Au niveau de cette deuxième extrémité du bras 46, le renvoi supplémentaire 44 comporte également un axe de renvoi 48 s'étendant perpendiculairement au premier bras 46 selon l'axe de pivotement Z du renvoi supplémentaire 44 sur l'organe suiveur 26'. La tige de guidage 50 traverse cet axe de renvoi 48. Elle est montée coulissante dans une bague de coulissement 52 qui est montée de façon pivotante sur le carter 12, par un support pivotant 54 brasé sur le carter.

La liaison entre le dispositif de démultiplication d'actionnement 20 et la géométrie variable 110 se fait à distance, via un câble push-pull 60 (par exemple de type câble 'Bowden') et un organe de jonction coulissant 120.

L'action du vérin 24, transmise par le renvoi 26, la barre de synchronisation 30, le renvoi suiveur 26' puis amplifiée par le dispositif de démultiplication d'actionnement 20 (le fonctionnement de ce dispositif sera décrit plus loin) est transmise au câble de commande push-pull 60.

L'extrémité 64 du câble de commande 60 est reliée à la partie médiane d'un étrier ou pièce en U 126. Les deux branches de l'étrier 126 passent de part et d'autre d'un organe de commande 115 de la géométrie variable 110, qui commande les déplacements de l'équipement à géométrie variable 110 suivant la direction indiquée par la flèche A. Cet organe de commande 115 se présente comme une plaque rectangulaire perçée d'un trou oblong 124. Les deux branches de l'étrier 126 sont reliées par une tige 122 qui passe à travers le trou oblong 124.

L'étrier 126 et la tige 122 coulissant dans le trou allongé 124 constituent l'organe de jonction coulissant 120. L'actionneur 24 entraine le second équipement 110 via cet organe de jonction coulissant 120, dont le coulissement définit une course morte. En effet, tant que la tige 122 se déplace à l'intérieur du trou allongé 124 sans être bloquée à une extrémité de celui-ci, cela n'entraine aucun mouvement de l'organe de commande 115, en d'autres termes les mouvements de l'actionneur (le vérin 24) n'entrainent aucun mouvement de l'organe de commande 115 de l'équipement 110.

Notons que, selon un autre mode de réalisation (non représenté), l'extrémité 62 du câble de commande 60 pourrait être raccordée directement à l'extrémité du bras 36 du renvoi suiveur 26' (figure 1), permettant d'obtenir une course identique à celle du premier équipement commandé 10 (anneau de commande 22 de l'étage 10 d'aubes à angle de calage variable). Ce mode de réalisation viserait le cas où la commande du deuxième équipement ne nécessite pas une démultiplication de la course d'actionnement.

Pour faire comprendre le fonctionnement du système de commande 1, les figures 2 à 4 illustrent le mouvement de ce système dans trois positions, correspondant à une extension minimale, intermédiaire et maximale du vérin 24. Dans le système de commande 1, l'extension du vérin 24 est le paramètre d'actionnement de cet actionneur.

La figure 2 représente par exemple le début d'une action sur les équipements. En situation initiale (figure 2), le vérin est en position d'extension minimale ; les aubes 14 à angle de calage variable sont en position ouverte.

A partir de cette position, l'actionnement du vérin 24 provoque une rotation du renvoi pilote 26, et une autre du renvoi suiveur 26' entrainé par la barre de synchronisation 30. La rotation du renvoi 26 autour de son point de pivotement sur le boîtier 28 entraîne à son tour la bielle 32 qui fait alors tourner dans un sens ou dans l'autre l'anneau 22 autour de l'axe X-X de la turbomachine. Comme indiqué précédemment, la rotation de l'anneau 22 provoque une modification synchronisée de la position angulaire des aubes 14 de l'étage 10 par l'intermédiaire des leviers de commande 18.

D'autre part, la rotation du renvoi 26' entraine une rotation, d'angle démultiplié par rapport à la rotation du renvoi 26', du renvoi supplémentaire 44. La démultiplication de l'angle est liée au fait que le pivotement du renvoi suiveur 26' amène l'axe de pivot (bras 48) du renvoi supplémentaire 44 à passer très près du point de pivot sur le carter (support pivotant 54). Dans ces conditions, une très faible rotation du renvoi suiveur 26' entraine une très forte rotation (relativement) du renvoi supplémentaire 44.

La rotation du renvoi supplémentaire 44 entraine le coulissement du câble de commande 60 dans sa gaine, ainsi que de l'étrier 126, qui sont repoussés par le bras 46 du renvoi supplémentaire 44.

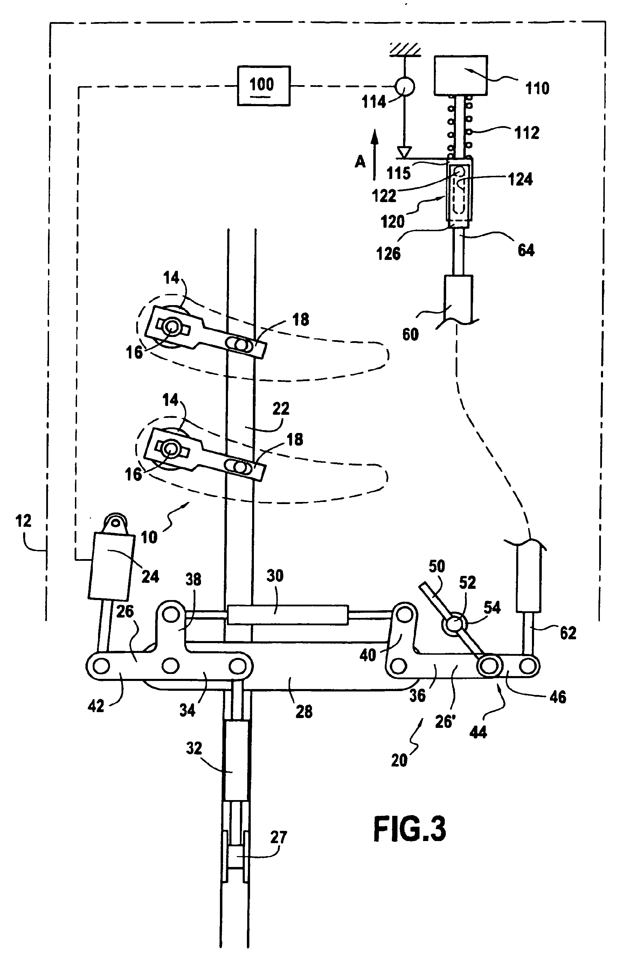

La figure 3 correspond à une position spécifique au cours de l'extension du vérin 24.

Lorsque le vérin 24 s'étend, le câble de commande 60 repousse l'étrier 126 et la tige 122 dans le trou oblong 124 dans la direction de la flèche A. La position représentée sur la figure 3 est spécifique en ce qu'elle correspond au moment précis où la tige 122 solidaire de l'étrier 126 arrive en butée à l'extrémité du trou 124 dans la direction de la flèche A (qui est la direction d'actionnement pour l'organe de commande 115), position à partir de laquelle la tige 122 commence à entrainer l'organe de commande (plaque 115) de la géométrie variable 110. Inversement depuis le début de l'extension du vérin 24, et jusqu'à cette position, l'organe de commande 115 n'est pas déplacé de sa position initiale (figure 2) malgré le déplacement de l'étrier 126. Aussi, la plage d'actionnement du vérin 24, entre sa position initiale (figure 2) et la position intermédiaire spécifique de la figure 3, constitue une course morte pour le second équipement commandé 110.

En revanche, à partir de la position spécifique ou position de début d'actionnement apparaissant sur la figure 3, toute extension supplémentaire du vérin 24 conduit la tige 122 solidaire de l'étrier 126 à repousser, dans la direction de la flèche A, l'organe de commande 115 et entraine un déplacement de celui-ci. Les positions du vérin 24 supérieures ou égales à cette position constituent la plage d'actionnement du second équipement 110.

Il faut noter de plus que dès lors que le vérin 54 dépasse cette position de début d'actionnement, un ressort 112 agit comme moyen de rappel pour maintenir l'organe de commande 115 en contact permanent avec la tige 122. Ainsi, l'organe de commande 115 suit à chaque instant les déplacements de la tige 122, dans la direction de la flèche A comme dans la direction opposée. Inversement, dans la course morte de l'organe de jonction coulissant 120, l'organe de commande 115 reste bloqué, en position 'basse' sur les figures 2 et 3.

Enfin, le système de commande comporte un capteur de position 114 disposé au voisinage de ladite géométrie variable et apte à retransmettre une information relative à la position de l'équipement à géométrie variable 110. Dans le mode de réalisation présenté, le capteur 114 est prévu pour déterminer la position de l'organe de commande 115 de la géométrie variable 110, et la retransmettre à l'unité de commande électronique 100.

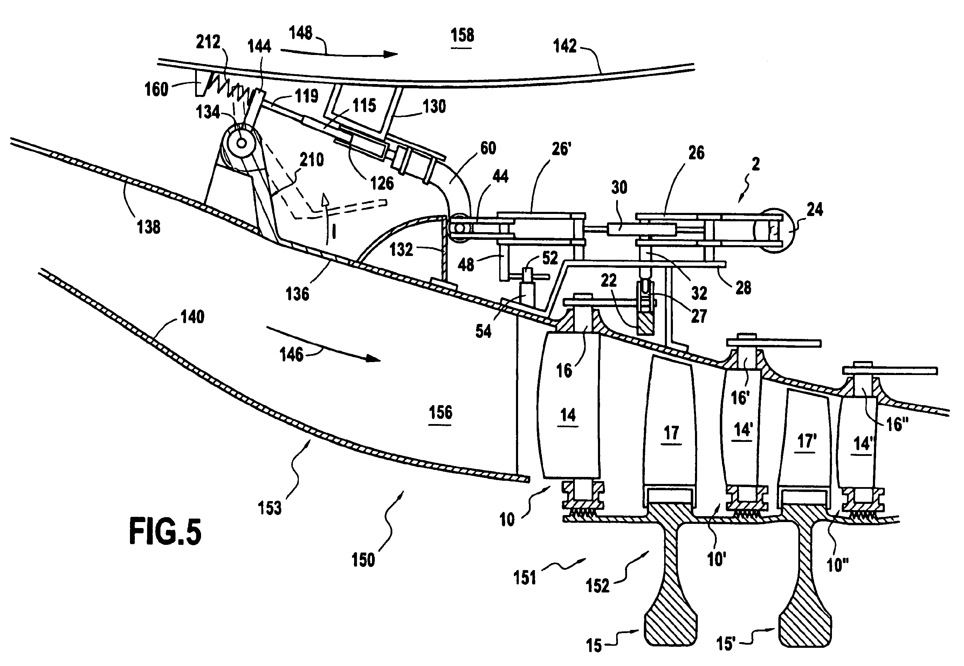

En faisant référence à la figure 5, un mode de réalisation d'un système de commande 2 selon l'invention va maintenant être décrit. Cette figure présente le cas particulier dans lequel le second équipement à géométrie variable est un système de prélèvement d'air 210 comportant un ensemble de trappes de prélèvement d'air 136.

Ce système de commande 2 est très voisin du système décrit en relation avec les figures 1 à' 4 ; les éléments correspondants conservent la même référence numérique.

La figure 5 est une vue en coupe partielle d'une turbomachine 150 qui est un turboréacteur double flux. Dans une partie amont de cette turbomachine 150, le flux d'air ingéré par la turbomachine est divisé en un flux primaire 146 et un flux secondaire 148. Le flux primaire est le comburant permettant la combustion d'un carburant injecté dans une chambre de combustion.

Une première partie de l'énergie libérée par la combustion est récupérée au moyen d'une première turbine (turbine haute pression) par un premier sous-ensemble principal de la turbomachine, le corps haute pression 151. Le corps haute pression est dénommé ainsi car avant d'être injectés dans la chambre de combustion, les gaz de flux primaire sont compressés à haute pression par un compresseur 152, dit compresseur haute pression, dont une partie apparaît sur la figure 5.

Une deuxième partie de l'énergie libérée par la combustion est récupérée au moyen d'une deuxième turbine par un deuxième sous-ensemble principal de la turbomachine, le corps basse pression 153. Ce corps basse pression comporte au moins un étage d'aubes (les aubes de soufflante), entrainées en rotation de manière à engendrer par réaction une grande partie de la poussée délivrée par la turbomachine 150.

Du fait de cette conception, les corps haute et basse pression sont relativement indépendants l'un par rapport à l'autre, notamment en termes de vitesse de rotation. Il s'ensuit que les commandes à appliquer à leurs équipements peuvent être selon les cas gouvernées par des considérations complètement différentes ou indépendantes.

De manière connue, en suivant le flux d'air secondaire d'amont vers l'aval à travers la turbomachine, le flux d'air secondaire est d'abord comprimé par un compresseur basse pression, puis par le compresseur haute pression ; il passe alors dans la chambre de combustion, puis se détend en traversant des turbines haute et basse pression successivement. Le compresseur haute pression est donc situé en aval du compresseur basse pression.

Les flux primaire 146 et secondaire 148 traversent la turbomachine 150 dans des passages annulaires concentriques respectivement 156 et 158. Le passage 156 du flux primaire s'étend entre un carénage extérieur 138 et un carénage intérieur 140. Le passage 158 du flux secondaire s'étend entre un carénage extérieur non représenté, qui est le carénage intérieur de la nacelle, et un carénage intérieur 142.

Le système de commande 2 est disposé entre les carénages 138 et 142 séparant les flux primaire et secondaire.

De manière traditionnelle, la position des aubes des étages d'aubes à angle de calage variable est commandée en fonction de la pression ambiante et de la vitesse de rotation du corps haute pression.

D'autre part, de manière traditionnelle l'ouverture des trappes de prélèvement d'air 136 est commandée en fonction de la pression ambiante et du débit d'air en sortie du compresseur basse pression. Ainsi, le prélèvement d'air du flux secondaire en aval du compresseur basse pression est réalisé afin de modifier le régime de fonctionnement de ce compresseur.

Bien que les paramètres habituels de commande des étages d'aubes à angle de calage variable et des trappes de prélèvement d'air, rappelés précédemment, soient différents, le système de commande 2 permet la commande de deux équipements : d'une part, les étages 10, 10', 10" d'aubes à angle de calage variable ; d'autre part un équipement à géométrie variable 210 constitué par un ensemble de trappes de prélèvement d'air 136.

Les étages d'aubes à angle de calage variable 10, 10' et 10" comportent respectivement trois séries d'aubes 14, 14' et 14", aptes à pivoter respectivement autour d'axes 16, 16', 16". Deux roues à aubes 15, 15' portant des aubes mobiles 17, 17' sont intercalées entre les étages 10 et 10', 10' et 10" respectivement.

Par souci de simplicité, seule la commande du premier étage d'aubes 10 est représentée, mais pas celle des autres étages 10', 10". La commande de cet étage est identique à ce qui a été présenté en relation avec les figures 1 à 4.Le second équipement commandé est l'ensemble de trappes de prélèvement d'air 136. Dans la description qui suit, une seule trappe est décrite ; cependant en réalité, la turbomachine comporte un ensemble de trappes identiques, réparties sur toute la circonférence de la turbomachine dans le carénage 138, commandées de manière identique à la trappe 136 décrite.

La trappe 136 a plusieurs fonctions. Une de ses fonctions est, lorsque l'air ingéré par la turbomachine est très chargé en eau (pluie, neige ou grêle), de permettre d'évacuer une partie de cet air du flux primaire, afin d'éviter les perturbations de la combustion qui résulteraient d'une proportion d'eau trop importante dans le mélange de combustion. Une autre fonction est de décharger le circuit de flux primaire, lors d'une forte décélération, ou encore à bas régime. La commande émise par l'actionneur 24 est transmise à la trappe 136 via le câble push-pull 60, l'étrier 126, et l'organe de commande 115. Le câble push-pull est fixé aux carénages 138, 142 par des supports 130 et 132. Le support 130 sert également de moyen de guidage pour les déplacements de l'étrier 126 et de l'organe de commande 115.

La commande de la trappe 136 diffère légèrement du dispositif illustré par les figures 1 à 4, par le fait que les moyens de rappels (ressort 212) sont agencés différemment du ressort 112 des figures 1 à 4.

La trappe 136 est apte à pivoter autour d'un axe de pivot 134 (rotation suivant la flèche I). En général, elle est fermée et rappelée en position fermée par le ressort 212. Une extrémité du ressort 212 est montée sur un support 160 solidaire du carénage 142, tandis que l'autre extrémité applique une force de rappel sur un bras de manoeuvre 144 solidaire de la trappe 136, qui ferme la trappe 136.

Pour ouvrir la trappe 136, le vérin 24 doit être commandé dans une position d'extension suffisante pour déplacer l'organe de commande 115 de la trappe 136 (c'est-à-dire au-delà de la position spécifique présentée sur la figure 3). A partir et au-delà de cette position spécifique ou position de début d'actionnement, le paramètre du vérin 24 varie dans la plage d'actionnement de la trappe 136. Une première conséquence est que cela impose aux aubes 14, lorsque l'on veut ouvrir la trappe 136, un angle de calage correspondant à une forte contraction du vérin 24.

Dans cette plage d'actionnement, l'étrier 126 déplace l'organe de commande 115 de la trappe 136. Cet organe de commande 115 a la forme d'une plaque prolongée par une tige 119. L'extrémité de la tige 119 est en appui sur le bras de manoeuvre 144. Le déplacement de l'organe de commande 115 pousse le bras de manoeuvre 144, entrainant la rotation et l'ouverture de la trappe 136.

L'air prélevé sur le flux primaire par la trappe 136 est ensuite évacué dans la veine secondaire (Cette étape n'est pas représentée sur la figure 5). Cet air s'ajoute à l'air de flux secondaire accéléré par les aubes de soufflante (aubes FAN).

Lorsque le vérin est étendu ou étiré, au moment où l'on souhaite refermer la trappe 136, l'étrier 126 et l'organe de commande 115 sont tirés en arrière par le câble de commande 60. La trappe 136 se referme alors sous l'effet du ressort 212.

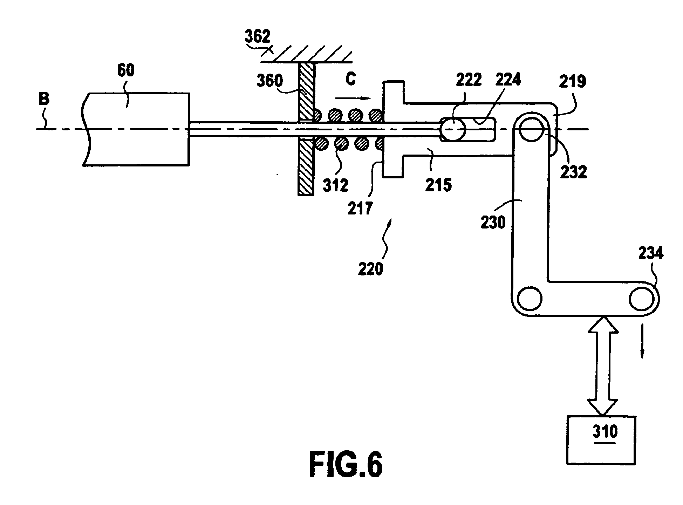

La figure 6 présente un système de débrayage 220 faisant partie d'un système de commande de deux équipements à géométrie variables faisant partie de deux corps différents, le second étant un équipement 310. Le système de débrayage 220 est comparable au système de débrayage du mode de réalisation présenté par les figures 1 à 4, constitué par un organe de jonction coulissant 120. Comme celui-ci, le système de débrayage 220 permettant également d'aménager une 'course morte'.

Le système de débrayage 220 est prévu pour être placé à l'extrémité d'un câble de commande push-pull 60. L'extrémité du câble push-pull 60 est fixée à une barre d'entrainement 222, perpendiculaire à l'axe B du câble.

Le système de débrayage 220 comporte également un organe de commande 215. Celui-ci comporte un trou oblong 224, allongé dans la direction de l'axe B, dans lequel passe la barre 222. Ainsi, la barre 222 est apte à entrainer en translation l'organe de commande 215, dès lors qu'elle est en butée à une extrémité du trou oblong 224.

Un ressort de rappel 312, fonctionnant en compression, est disposé entre une première extrémité 217 de l'organe de commande 215 et un support 360 solidaire d'une partie fixe 362 de la turbomachine. Ce ressort 312 sollicite l'organe de commande suivant l'axe B, dans le sens qui correspond à un premier sens de déplacement du câble push-pull 60 (flèche C), en exerçant une force sur l'extrémité 217 de l'organe de commande 215.

Aussi, le fonctionnement de ce système de débrayage est le suivant :
Dans une première plage de valeurs de l'actionneur qui agit sur le câble de commande push-pull 60, la tige 222 est en butée sur une extrémité du trou oblong 224 et le ressort 312 est comprimé. Les mouvements de l'organe de commande 215 sont donc identiques à ceux de la tige 222.
Dans une deuxième plage de valeurs de l'actionneur, dès lors que le ressort 312 s'est étendu et a atteint son extension maximale, il ne joue plus aucun rôle. La tige 222 peut se déplacer davantage sous l'effet d'une poussée du câble push-pull 60, sans pour autant que l'organe de commande 215 ne se déplace. Cette deuxième plage de valeurs du paramètre d'actionnement constitue donc une course morte pour le second équipement commandé 310.

L'organe de commande 215 n'agit pas directement sur ce second équipement commandé 310. La deuxième extrémité 219 de l'organe de commande 215, à l'opposé de la première extrémité 217, est liée de manière articulée à une extrémité 232 d'un levier 230. L'autre extrémité 234 de ce levier 230 est liée de manière articulée à l'équipement commandé 310. Le levier 230 permet ainsi de démultiplier, avec un coefficient pouvant être supérieur, égal ou inférieur à un, le déplacement de l'organe de commande 215 ; ou encore, de changer la direction d'actionnement.

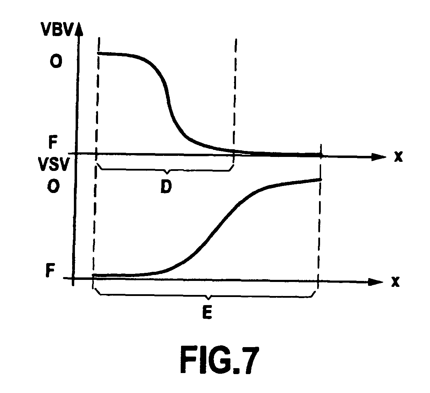

La figure 7 présente de manière plus théorique comment deux équipements sont commandés par un système de commande comprenant un dispositif de débrayage tel que celui 220 présenté sur la figure 6.

Cette figure fait référence au cas où le premier équipement commandé est un étage d'aubes à angle de calage variable VSV, et où le second équipement est un ensemble de valves de prélèvement d'air VBV.

L'abscisse x indique les variations du paramètre de l'actionneur, c'est-à-dire l'extension plus ou moins importante du vérin 24. Ce paramètre x varie entre une position initiale qui correspond ou au ralenti ou au bas régime de la turbomachine, et une position finale qui correspond au haut régime de la turbomachine.

L'ordonnée correspond aux angles d'ouverture respectivement des aubes à angle de calage variable VSV et des vannes de prélèvement d'air VBV. Ces angles évoluent pour chacun des deux équipements entre deux positions indiquées O « ouvert » et F « fermé ».

La loi de commande de l'étage d'aubes VSV est figurée par la courbe du bas. Elle fait apparaître une ouverture progressive des aubes, dans une plage d'actionnement E. Selon l'agencement du système de commande, l'ouverture peut être plus ou moins brutale, ce qui se traduit par une pente plus ou moins accentuée de cette courbe.

La loi de commande des vannes de prélèvement d'air VBV est figurée par la courbe du haut. Les vannes de prélèvement d'air VBV se ferment progressivement au fur et à mesure que le paramètre d'actionnement x augmente (extension du vérin 24), à l'intérieur respectivement de la plage d'actionnement D.

Comme on peut le constater sur la figure 7, dans la plage de fermeture des vannes de prélèvement d'air VBV, qui correspond à des régimes relativement faibles de la turbomachine, les aubes à angle de calage variable VSV sont sensiblement fermées ; et ce n'est que lorsque les vannes de prélèvement d'air VBV sont largement fermées que commence l'ouverture des aubes à angle de calage variable VSV.

De même, une fois que les vannes de prélèvement d'air VBV sont largement fermées, commence l'ouverture des aubes à angle de calage variable VSV. On comprend ainsi que la commande fine de position tant des aubes à angle de calage variable, que des vannes de prélèvement d'air, est possible avec l'actionneur unique que comporte le système de commande selon l'invention.

Le dispositif de débrayage 120 présenté sur les figures 1 à 5 présentait une course morte au début de la plage de variation du paramètre d'actionnement.

Au contraire, dans le dispositif de débrayage 220 utilisé dans le système de commande auquel renvoie la figure 7, la course morte est située à la fin de la plage de variation du paramètre d'actionnement (pour des valeurs élevées de l'abscisse x).

Le système de commande est agencé pour fermer les vannes de prélèvement d'air VBV de telle sorte qu'il y ait un début d'ouverture des aubes VSV pendant la fermeture des vannes VBV (c'est-à-dire, de telle sorte que les aubes VSV commencent à s'ouvrir, s'ouvrent partiellement avec une ouverture nettement inférieure à 50%, par exemple inférieure à 20%). Cet agencement est facilité par un dispositif de démultiplication d'actionnement, qui permet d'obtenir une fermeture complète des vannes VBV sur une plage d'actionnement H pourtant de faible amplitude. En utilisant un dispositif de démultiplication adéquat, on peut ainsi piloter l'équipement à géométrie variable 310 avec une plage d'actionnement réduite, valant par exemple 20%, voire 10% ou même 5% de la plage d'actionnement totale de l'actionneur utilisé.

Ensuite, les vannes de prélèvement d'air VBV étant fermées ou du moins sensiblement fermées, le système de commande est apte à et permet de réaliser la plus grande partie de la fermeture des aubes de l'étage d'aubes à angle de calage variable. Ainsi, alors que les vannes VBV sont fermées et donc ne sont plus en train d'être actionnées par l'actionneur, celui-ci reste pleinement opérationnel pour agir sur et régler l'autre équipement, à savoir les aubes de l'étage d'aubes à angle de calage variable.

## Revendications

1. Système de commande d'au moins deux équipements à géométrie variable d'une turbomachine, comportant un actionneur (24) qui actionne les deux équipements (22, 110, 210) ; dont un équipement comporte au moins un étage (10) d'aubes de stator (14) à angle de calage variable, et dont un équipement est une vanne de prélèvement d'air (136) d'un corps de la turbomachine ;
le système de commande **se caractérisant en ce qu'**il est agencé pour commander une ouverture progressive de l'étage d'aubes, et une fermeture progressive de la vanne de prélèvement d'air, au fur et à mesure qu'un paramètre d'actionnement de l'actionneur augmente.

2. Système de commande selon la revendication 1, **caractérisé en ce qu'**il est agencé pour fermer ladite vanne de prélèvement d'air de telle sorte qu'il y ait un début d'ouverture des aubes de stator (14) à angle de calage variable pendant la fermeture de ladite vanne de prélèvement d'air, au fur et à mesure qu'un paramètre d'actionnement dudit actionneur augmente.

3. Système de commande selon la revendication 1 ou 2, dans lequel, ladite vanne de prélèvement d'air étant sensiblement fermée, le système de commande est apte à réaliser la plus grande partie de la fermeture des aubes de l'étage d'aubes de stator à angle de calage variable.

4. Système de commande selon l'une quelconque des revendications 1 à 3, dans lequel l'étage d'aubes (10) est formé d'une pluralité d'aubes (14, 14') qui sont montées chacune de façon pivotante sur un carter (12) de la turbomachine et d'un anneau de commande (22) entourant le carter et relié à chacune des aubes (14) de l'étage par l'intermédiaire de leviers (18), l'actionneur étant apte à entraîner en rotation l'anneau de commande (22) de l'étage (10) par l'intermédiaire d'un organe pilote (26) monté de façon pivotante sur le carter (12).

5. Système de commande selon l'une quelconque des revendications 1 à 4, dont l'actionneur comporte un organe de commande mobile (26) dont les déplacements transmettent la commande aux deux équipements.

6. Système de commande selon l'une quelconque des revendications 1 à 5, dont l'actionneur (24) est agencé pour actionner un premier de ces équipements en faisant varier un paramètre dans une plage d'actionnement de premier équipement (D) en dehors de laquelle il ne peut agir sur le premier équipement,
l'actionneur (24) étant agencé pour actionner le second de ces équipements en faisant varier le même paramètre dans une plage d'actionnement de second équipement (C), en dehors de laquelle il ne peut agir sur le second équipement, au moins une partie de la plage d'actionnement de premier équipement (D) étant hors de la plage d'actionnement de second équipement (C).

7. Système de commande selon la revendication 6, dont la plage d'actionnement de second équipement (C) est incluse dans la plage d'actionnement de premier équipement.

8. Système de commande selon l'une quelconque des revendications 1 à 7, dans lequel la liaison entre l'actionneur (24) et l'un des équipements (110) comporte un dispositif de débrayage (120), apte à débrayer l'entrainement de cet équipement (110) par l'actionneur (24) sur une plage de valeurs d'un paramètre d'actionnement (x) de l'actionneur.

9. Système de commande selon la revendication 8, dont le dispositif de débrayage comporte un premier organe de commande, mobile (115) dans un espace libre d'un deuxième organe de commande (126), cet intervalle aménageant ainsi une course morte pour le second équipement (110).

10. Système de commande selon l'une quelconque des revendications 1 à 9, comportant en outre des moyens de rappel (112, 212) qui maintiennent un organe de commande (115) de l'un des équipements (110,210) dans une position prédéterminée, au moins lorsqu'un paramètre (x) de l'actionneur varie dans un intervalle situé à l'extérieur d'une plage d'actionnement (C) de l'équipement (110, 210).

11. Système de commande selon l'une quelconque des revendications 1 à 10, comportant en outre un dispositif de démultiplication d'actionnement (20) disposé dans la liaison entre l'actionneur et l'un des équipements.

12. Système de commande selon la revendication 11, comportant en outre un dispositif de démultiplication d'actionnement (20) disposé dans la liaison entre l'actionneur et l'un des équipements, le dispositif de démultiplication d'actionnement comportant un organe suiveur (26') monté de façon pivotante sur le carter, et un organe pivotant supplémentaire, (44) intercalé entre l'organe suiveur (26') et soit l'équipement comportant l'étage d'aubes, soit la vanne de prélèvement d'air, pour transmettre la commande de l'actionneur (24) à cet équipement, ledit organe pivotant supplémentaire (44) étant monté de façon pivotante à la fois sur le carter (12) et sur l'organe suiveur (26').

13. Turbomachine, comportant un système de commande selon l'une quelconque des revendications 1 à 12.

## Claims

1. A control system for controlling at least two variable-geometry devices in a turbomachine, the system comprising an actuator (24) that actuates the two devices (22, 110, 210); comprising one device having at least one stage (10) of variable-pitch stator vanes (14) and one device constituting an air-bleed valve (136) for a spool of the turbomachine; the control system being **characterized in that** it is arranged to control progressive opening of the vane stage and progressive closing of the air-bleed valve as an actuation parameter of the actuator increases.

2. A control system according to claim 1, **characterized in that** it is arranged to close said air bleed valve in such a manner that the variable-pitch stator vanes (14) begin to open during closure of said air-bleed valve, with progressive increase of an actuation parameter of said actuator.

3. A control system according to claim 1 or claim 2, wherein, when said air bleed valve is substantially closed, the control system is suitable for performing the major fraction of closure of the vanes of the stage of variable-pitch stator vanes.

4. A control system according to any one of claims 1 to 3, wherein the vane stage (10) is made up of a plurality of vanes (14, 14'), each mounted to pivot on a casing (12) of the turbomachine, and of a control ring (22) surrounding the casing and connected to each of the vanes (14) of the stage via respective levers (18), the actuator being suitable for causing the control ring (22) of the stage (10) to turn by means of a driver member (26) that is pivotally mounted on the casing (12).

5. A control system according to any one of claims 1 to 4, wherein the actuator includes a movable control member (26) with the movement thereof transmitting commands to both devices.

6. A control system according to any one of claims 1 to 5, wherein the actuator (24) is arranged to actuate a first of said devices by varying a parameter over an actuation range for the first device (D) outside which it cannot act on the first device, the actuator (24) being arranged to actuate the second device by causing the same parameter to vary over an actuation range for the second device (C), outside which it cannot act on the second device, at least a fraction of the first device actuation range (D) lying outside the second device actuation range (C).

7. A control system according to claim 6, wherein the second device actuation range (C) is included within the first device actuation range.

8. A control system according to any one of claims 1 to 7, wherein the connection between the actuator (24) and one of the devices (110) includes a declutching device (120) that is suitable for declutching the drive of said device (110) by the actuator (24) over a range of values of an actuation parameter (x) of the actuator.

9. A control system according to claim 8, wherein the declutching device comprises a first control member (115) that is movable in an empty space of a second control member (126), this space thus providing lost motion for the second device (110).

10. A control system according to any one of claims 1 to 9, further including biasing means (112, 212) that maintain a control member (115) of one of the devices (110, 210) in a predetermined position, at least when a parameter (x) of the actuator varies over a range situated outside an actuation range (C) of the device (110, 210).

11. A control system according to any one of claims 1 to 10, further including an actuation scaling device (20) arranged in the connection between the actuator and one of the devices.

12. A control system according to claims 4 and 11, wherein the actuation scaling device comprises a follower member (26') pivotally mounted on the casing, and an additional pivoting member (44) interposed between the follower member (26') and either the device comprising the vane stage or the air-bleed valve, in order to transmit the control from the actuator (24) to said device, said additional pivoting member (44) being mounted to pivot both on the casing (12) and on the follower member (26').

13. A turbomachine including a control system according to any one of claims 1 to 12.

## Patentansprüche

1. System zur Steuerung von wenigstens zwei Einrichtungen mit veränderlicher Geometrie einer Turbomaschine, umfassend einen Aktor (24), der die beiden Einrichtungen (22, 110, 210) betätigt, von denen eine Einrichtung wenigstens eine Stufe (10) von Statorschaufeln (14) mit variablem Einstellwinkel umfaßt und von denen eine Einrichtung ein Luftentnahmeventil (136) eines Körpers der Turbomaschine ist,
wobei das Steuerungssystem **dadurch gekennzeichnet ist, daß** es dazu eingerichtet ist, ein progressives Öffnen der Schaufelstufe sowie ein progressives Schließen des Luftentnahmeventils in dem Maße zu steuern wie sich ein Betätigungsparameter des Aktors erhöht.

2. Steuerungssystem nach Anspruch 1, **dadurch gekennzeichnet, daß** es dazu eingerichtet ist, das Luftentnahmeventil derart zu schließen, daß es während des Schließens des Luftentnahmeventils zu einem anfänglichen Öffnen der Statorschaufeln (14) mit variablem Einstellwinkel kommt, in dem Maße wie sich ein Betätigungsparameter des Aktors erhöht.

3. Steuerungssystem nach Anspruch 1 oder 2, wobei, wenn das Luftentnahmeventil im wesentlichen geschlossen ist, das Steuerungssystem geeignet ist, den größten Teil des Schließens der Schaufeln der Stufe von Statorschaufeln mit variablem Einstellwinkel zu vollziehen.

4. Steuerungssystem nach einem der Ansprüche 1 bis 3, wobei die Schaufelstufe (10) von einer Vielzahl von Schaufeln (14, 14`), die jeweils verschwenkbar an einem Gehäuse (12) der Turbomaschine angebracht sind, und von einem Steuerring (22) gebildet ist, der das Gehäuse umgibt und mit jeder der Schaufeln (14) der Stufe über Hebel (18) verbunden ist, wobei der Aktor geeignet ist, den Steuerring (22) der Stufe (10) mittels eines an dem Gehäuse (12) schwenkbar angebrachten Steuerorgans (26) drehanzutreiben.

5. Steuerungssystem nach einem der Ansprüche 1 bis 4, dessen Aktor ein bewegliches Steuerorgan (26) umfaßt, dessen Bewegungen die Steuerung auf beide Einrichtungen übertragen.

6. Steuerungssystem nach einem der Ansprüche 1 bis 5, dessen Aktor (24) dazu eingerichtet ist, eine erste dieser Einrichtungen durch Verändern eines Parameters innerhalb eines Betätigungsbereichs der ersten Einrichtung (D), außerhalb dessen er nicht auf die erste Einrichtung einwirken kann, zu betätigen,
wobei der Aktor (24) dazu eingerichtet ist, die zweite dieser Einrichtungen durch Verändern des gleichen Parameters innerhalb eines Betätigungsbereichs der zweiten Einrichtung (C), außerhalb dessen er nicht auf die zweite Einrichtung einwirken kann, zu betätigen, wobei wenigstens ein Teil des Betätigungsbereiches der ersten Einrichtung (D) außerhalb des Betätigungsbereiches der zweiten Einrichtung (C) liegt.

7. Steuerungssystem nach Anspruch 6, dessen Betätigungsbereich der zweiten Einrichtung (C) in dem Betätigungsbereich der ersten Einrichtung enthalten ist.

8. Steuerungssystem nach einem der Ansprüche 1 bis 7, wobei die Verbindung zwischen dem Aktor (24) und einer der Einrichtungen (110) eine Ausrückvorrichtung (120) umfaßt, die geeignet ist, den Antrieb dieser Einrichtung (110) durch den Aktor (24) über einen Wertebereich eines Betätigungsparameters (x) des Aktors zu trennen.

9. Steuerungssystem nach Anspruch 8, dessen Ausrückvorrichtung ein erstes Steuerorgan (115) umfaßt, das in einem Freiraum eines zweiten Steuerorgans (126) beweglich ist, wodurch dieser Bereich einen Totgang für die zweite Einrichtung (110) bildet.

10. Steuerungssystem nach einem der Ansprüche 1 bis 9, ferner umfassend Rückstellmittel (112, 212), die ein Steuerorgan (115) von einer der Einrichtungen (110, 210) in einer vorbestimmten Position halten, wenigstens dann, wenn ein Parameter (x) des Aktors in einem außerhalb eines Betätigungsbereichs (C) der Einrichtung (110, 210) gelegenen Bereich variiert.

11. Steuerungssystem nach einem der Ansprüche 1 bis 10, ferner umfassend eine Vorrichtung zur Betätigungsuntersetzung (20), die in der Verbindung zwischen dem Aktor und einer der Einrichtungen angeordnet ist.

12. Steuerungssystem nach Anspruch 11, ferner umfassend eine Vorrichtung zur Betätigungsuntersetzung (20), die in der Verbindung zwischen dem Aktor und einer der Einrichtungen angeordnet ist, wobei die Vorrichtung zur Betätigungsuntersetzung ein Nachlauforgan (26'), das an dem Gehäuse schwenkbar angebracht ist, sowie ein zusätzliches Schwenkorgan (44) umfaßt, das zwischen dem Nachlauforgan (26') und der die Schaufelstufe umfassenden Einrichtung oder dem Luftentnahmeventil angeordnet ist, um die Steuerung des Aktors (24) auf diese Einrichtung zu übertragen, wobei das zusätzliche Schwenkorgan (44) sowohl an dem Gehäuse (12) als auch an dem Nachlauforgan (26') schwenkbar angebracht ist.

13. Turbomaschine, die ein Steuerungssystem nach einem der Ansprüche 1 bis 12 umfaßt.
